# EUROPEAN PATENT APPLICATION

(11) **EP 4 451 415 A1**
(43) Date of publication of application: **23.10.2024**
(21) Application number: 22948452.2
(22) Date of filing: 30.06.2022
(51) Int. Cl.: H01M 10/42

(54) **CHARGING CONTROL METHOD AND CHARGING CONTROL APPARATUS FOR LITHIUM-ION BATTERY**

(71) Applicant: Contemporary Amperex Technology (Hong Kong) Limited, Central, Central And Western District (HK)
(72) Inventor: XU, Xiaofu, Ningde, Fujian 352100 (CN); SHANG, Yibo, Ningde, Fujian 352100 (CN); PAN, Jianfu, Ningde, Fujian 352100 (CN); SUN, Jingxuan, Ningde, Fujian 352100 (CN); LIU, Qian, Ningde, Fujian 352100 (CN); YE, Yonghuang, Ningde, Fujian 352100 (CN)
(74) Representative: Gong, Jinping
(86) International application number: PCT/CN2022/102587
(87) International publication number: WO 2024/000338

(57) **Abstract**

Embodiments of the present application provide a charging control method and a charging control apparatus of a lithium-ion battery. The charging control method includes: performing charging control on the lithium-ion battery for the i^{th} time, so that a battery capacity value of the lithium-ion battery at a target charging cut-off voltage is 0.95C₀ to 1.05C₀, where C₀ is a nominal capacity of the lithium-ion battery, and the target charging cut-off voltage is less than or equal to the nominal voltage of the lithium-ion battery. The charging control method and the charging control apparatus according to the embodiments of the present application are beneficial to keeping the quantity of active lithium unchanged, thereby achieving the effect of automatically supplementing the battery capacity along with aging.

## Description

### TECHNICAL FIELD

Embodiments of the present application relate to the field of lithium-ion batteries, and in particular, to a charging control method and a charging control apparatus of a lithium-ion battery.

### BACKGROUND

A lithium-ion battery is a rechargeable battery, which mainly depends on the migration of lithium ions between a positive electrode and a negative electrode to work. In the charging and discharging process, Li+ is intercalated and deintercalated between the two electrodes back and forth: during charging, Li+ is deintercalated from the positive electrode and is intercalated into the negative electrode through an electrolyte, and the negative electrode is in a lithium-rich state, and the situation is opposite during discharging.

The common problem of the lithium-ion battery at present is that a large number of lithium ions deintercalated from the positive electrode will be consumed in the first charging process to form a solid electrode interphase (SEI). The irreversible consumption of the lithium ions of the positive electrode in the first charging process usually exceeds 10%, resulting in low charging and discharging efficiency in the first period, which may be only 50% to 77%, thereby reducing the energy density of the battery. On the other hand, the battery will continue to consume active lithium during normal use, thereby greatly shortening the service life of the battery.

### SUMMARY

In view of this, embodiments of the present application provide a charging control method and a charging control apparatus of a lithium-ion battery, which is beneficial to ensuring the quantity of active lithium unchanged, thereby achieving the effect of automatically supplementing the battery capacity along with aging.

According to a first aspect, a charging control method of a lithium-ion battery is provided and includes: performing charging control on the lithium-ion battery for the i^{th} time, so that a battery capacity value of the lithium-ion battery at a target charging cut-off voltage is 0.95C₀ to 1.05C₀, C₀ being a nominal capacity of the lithium-ion battery, the target charging cut-off voltage being less than or equal to the nominal voltage of the lithium-ion battery; where i takes a value from 1 to N and N is a positive integer greater than 1.

In this embodiment, the battery capacity value of the lithium-ion battery during each charging is controlled to reach a fixed capacity range, which is beneficial to ensuring the quantity of active lithium unchanged, thereby achieving the effect of automatically supplementing the battery capacity along with aging.

In a possible implementation, the performing charging control on the lithium-ion battery for the i^{th} time, so that a battery capacity value of the lithium-ion battery at a target charging cut-off voltage is 0.95C₀ to 1.05C₀ includes: in a case that a charging voltage of the lithium-ion battery reaches the target charging cut-off voltage, performing charging control on the lithium-ion battery for the i^{th} time in a manner of down-regulating a charging current, so that the battery capacity value of the lithium-ion battery under the target charging cut-off voltage is 0.95C₀ to 1.05C₀.

In this embodiment, in a case that the charging voltage of the lithium-ion battery reaches the target charging cut-off voltage, the lithium-ion battery is charged in a manner of down-regulating the charging current, so that the battery capacity value of the lithium-ion battery under the target charging cut-off voltage is 0.95C₀ to 1.05C₀, which is beneficial to ensuring the quantity of the active lithium unchanged without affecting the normal use of a battery cell body chemical system of the lithium-ion battery and without additionally considering that the electrolyte improves the reliability of the voltage application range for a long time, thereby achieving the effect of automatically supplementing the battery capacity along with aging.

In a possible implementation, a positive electrode of the lithium-ion battery includes a lithium-supplementing material.

In this embodiment, the positive electrode of the lithium-ion battery includes the lithium-supplementing material, so that the lithium-ion battery can slowly release active lithium in the charging process, the battery capacity value of the lithium-ion battery during each charging can reach a fixed range, and the quantity of active lithium can be ensured to be unchanged, thereby achieving the effect of automatically supplementing the battery capacity along with aging.

In a possible implementation, the lithium-supplementing material has the characteristic of a voltage platform area, and the voltage platform area of the lithium-supplementing material refers to: a charging and discharging test is performed on the lithium-supplementing material under the nominal voltage of the lithium-ion battery, and the obtained charging curve of the lithium-supplementing material meets that a slope of the charging curve with at least a cumulative SOC ratio greater than or equal to 40% is less than or equal to 15mv/1% SOC.

In a possible implementation, the charging control method further includes: determining an open capacity of the lithium-ion battery according to at least one of a test precision of a state of charge (SOC) of the lithium-ion battery, a calculation error of a state of health (SOH), an aging model state of a running throughput, an excess state of an N/P ratio of a negative electrode capacity per unit area/a positive electrode capacity per unit area, and a system prediction error of a battery management system (BMS), where the open capacity is used to indicate a capacity that is required to be compensated for the lithium-ion battery; and according to the open capacity, determining whether to perform charging control on the lithium-ion battery for the i^{th} time in a manner of down-regulating the charging current in a case that the charging voltage of the lithium-ion battery reaches the target charging cut-off voltage.

In this embodiment, the open capacity of the lithium-ion battery is determined according to at least one of the test precision of the state of charge (SOC) of the lithium-ion battery, the calculation error of the state of health (SOH), the aging model state of the running throughput capacity, the excess state of the N/P ratio of the negative electrode capacity per unit area/the positive electrode capacity per unit area, and the system prediction error of a battery management system (BMS), and it is further determined whether to reduce the charging current in a case that the charging voltage of the lithium-ion battery reaches the target charging cut-off voltage, so that the safety performance of the lithium-ion battery still can be ensured even under the condition of the maximum deviation.

In a possible implementation, the lithium-supplementing material includes a first voltage platform area. The charging control method further includes: in the i^{th} charging control, acquiring a minimum charging current of the lithium-ion battery under a first target charging cut-off voltage; and in a case that the minimum charging current is less than a current threshold, determining whether the battery capacity value of the lithium-ion battery reaches 0.95C₀ to 1.05C₀; where V_{c1}=V_{Pz1}±0.5V, V_{c1} is the first target charging cut-off voltage, and V_{pz1} is the first voltage platform area.

In a possible implementation, the lithium-supplementing material further includes a second voltage platform area. The charging control method further includes: in a case of determining that the battery capacity value does not reach 0.95C₀ to 1.05C₀ when the charging voltage of the lithium-ion battery reaches the first target charging cut-off voltage, controlling the charging voltage of the lithium-ion battery to reach a second target charging cut-off voltage; where V_{c2}=V_{pz2}±0.5V, V_{c2} is the second target charging cut-off voltage, and V_{pz2} is the second voltage platform area.

In this embodiment, a lithium-supplementing material with a plurality of voltage platform areas, so that the lithium ions in the lithium-supplementing material can be released slowly, the battery capacity value of the lithium-ion battery can reach 0.95C₀ to 1.05C₀ as much as possible, and the quantity of active lithium can be ensured to be unchanged, thereby achieving the effect of automatically supplementing the battery capacity along with aging.

In a possible implementation, the first voltage platform area and the second voltage platform area belong to a same lithium-supplementing material.

In a possible implementation, the first voltage platform area and the second voltage platform area belong to different lithium-supplementing materials.

In a possible implementation, the current threshold is greater than or equal to 0.01C₀.

In a possible implementation, the current threshold is greater than or equal to 0.05C₀.

In a possible implementation, the acquiring a minimum charging current of the lithium-ion battery under a first target charging cut-off voltage includes: determining a minimum charging current under the first target charging cut-off voltage according to a charging cumulative capacity (C), a state of charge (SOC) and a state of health (SOH) of the lithium-ion battery.

In a possible implementation, the determining a minimum charging current of the lithium-ion battery under a first target charging cut-off voltage includes: determining the charging cumulative capacity (C) according to the following formula: C=C₀-SOH*C₀*SOC; and determining the minimum charging current under the first target charging cut-off voltage according to the charging cumulative capacity (C).

In a possible implementation, the N/P ratio of the negative electrode capacity per unit area/the positive electrode capacity per unit area of the lithium-ion battery ranges from 0.5 to 1.5.

In this embodiment, the lithium-supplementing material is doped in the positive electrode of the lithium-ion battery, and the lithium ions in the lithium-supplementing material are released slowly through charging control, so that the N/P ratio can be less than 1.5. However, the smaller the N/P ratio is, the lower the use amount of the negative electrode is (the positive electrode provides a capacity, and the negative electrode serves as a design adjoint variable, so that the demand of graphite can be effectively saved, the cost can be reduced, and the energy density in a limited shell can be improved.

In a possible implementation, the N/P ratio ranges from 0.6 to 1.4.

In a possible implementation, the lithium-supplementing material includes at least one of the following materials: Li₃N, Li₂S/Co, LiF/Co, Li₂O/Co, Li₂O₂, Li₂NiO₂, Li₅FeO₄, Li₂C₂O₄, Li₂C₄O₄, Li₂C₃O₅, and Li₂C₄O₆.

In this embodiment, the lithium-supplementing material with the voltage platform area is selected, so that the lithium-supplementing material can slowly release lithium ions in the charging control of the lithium-ion battery, and the battery capacity of the lithium-ion battery under the target charging cut-off voltage can reach 0.95C₀ to 1.05C₀ as much as possible without affecting the normal use of a battery cell body chemical system of the lithium-ion battery and without additionally considering that the electrolyte improves the reliability of the voltage application range for a long time, thereby achieving the effect of automatically supplementing the battery capacity along with aging.

In a possible implementation, a positive electrode material of the lithium-ion battery is lithium manganese iron phosphate (LMFP), and the lithium-supplementing material is Li₂C₄O₄.

In a possible implementation, a positive electrode material of the lithium-ion battery is lithium iron phosphate (LFP), and the lithium-supplementing material is LiF/Co.

In a possible implementation, a positive electrode of the lithium-ion battery adopts at least one of the following materials: nickel cobalt manganese, nickel cobalt aluminum, nickel manganese spinel, a lithium-rich manganese-based material, lithium iron phosphate, lithium manganese iron phosphate, lithium vanadium phosphate, lithium manganese phosphate, lithium nickel phosphate, and lithium manganate.

In a possible implementation, an absolute value of a difference value between a working voltage of the lithium-ion battery and the nominal voltage of the lithium-ion battery is less than or equal to 500 mV.

In this embodiment, the absolute value of the difference value between the working voltage of the lithium-ion battery and the nominal voltage of the lithium-ion battery is set to be less than or equal to 500 mV, thereby facilitating the compatibility of the electrolyte on an active material and the lithium-supplementing material.

According to a second aspect, a charging control apparatus of a lithium-ion battery is provided and includes: a control unit, configured to: perform charging control on the lithium-ion battery for the i^{th} time, so that a battery capacity value of the lithium-ion battery at a target charging cut-off voltage is 0.95C₀ to 1.05C₀, where C₀ is a nominal capacity of the lithium-ion battery, the target charging cut-off voltage is less than or equal to the nominal voltage of the lithium-ion battery, and i takes a value from 1 to N and N is a positive integer greater than 1.

According to a third aspect, a charging control apparatus of a lithium-ion battery is provided. The charging control apparatus includes a memory and a processor, where the memory is configured to store an instruction; and the processor is configured to read the instruction and perform the method according to the first aspect and any possible implementation of the first aspect according to the instruction.

According to a fourth aspect, a chip is provided and includes a processor, configured to call and run a computer program from a memory, so that a device installed with the chip performs the method according to the first aspect and any possible implementation of the first aspect.

According to a fifth aspect, a computer program is provided. The computer program enables a computer to perform the method according to the first aspect and any possible implementation of the first aspect.

According to a sixth aspect, a computer-readable storage medium is provided and configured to store a computer program. The computer program enables a computer to perform the method according to the first aspect and any possible implementation of the first aspect.

According to a seventh aspect, a computer program product is provided and includes a computer program instruction. The computer program instruction enables a computer to perform the method according to the first aspect and any possible implementation of the first aspect.

### BRIEF DESCRIPTION OF THE DRAWINGS

In order to describe the technical solutions in the embodiments of the present application more clearly, the following briefly introduces the accompanying drawings required for describing the embodiments of the present application. Apparently, the accompanying drawings in the following description show merely some embodiments of the present application, and a person of ordinary skill in the art may also derive other drawings from these accompanying drawings without creative efforts.
FIG. 1 is a schematic block diagram of a charging control method of a lithium-ion battery according to an embodiment of the present application.
FIG. 2 is a schematic diagram of a charging cumulative capacity of a lithium-ion battery of a lithium-supplementing material with a voltage platform area according to an embodiment of the present application.
FIG. 3 is a schematic block diagram of a charging control apparatus of a lithium-ion battery according to an embodiment of the present application.
FIG. 4 is another schematic block diagram of a charging control apparatus of a lithium-ion battery according to an embodiment of the present application.
FIG. 5 is yet another schematic block diagram of a charging control apparatus of a lithium-ion battery according to an embodiment of the present application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of the present application without creative efforts shall fall within the protection scope of the present application.

Unless otherwise defined, all technical and scientific terms used in the present application have same meanings as those generally understood by persons skilled in the technical field of this application. The terms used in this specification of the present application are only intended to describe the specific embodiments and are not intended to limit this application. The terms "comprising", "having" and any variations thereof in the description, the claims and the description of the accompanying drawings of this application are intended to cover non-exclusive inclusion. The terms "first", "second", and so on in the description and claims or accompanying drawings of the present application are intended to distinguish different objects, but not to describe particular sequences or primary-secondary relationship.

"Embodiments" mentioned in the present application mean that specific features, structures or features described in embodiments combined can be comprised in at least one embodiment of the present application. The phrase appearing at each position of the description does not necessarily indicate the same embodiment, and it is not an exclusively independent or alternative embodiment of other embodiments. A person skilled in the art understands implicitly and explicitly that embodiments described in the present application can be combined with other embodiments.

In the description of the present application, it should be noted that unless otherwise specified and limited, the terms "connecting" and "connect" may be direct connection, may be indirect connection implemented by an intermediate medium, or may be internal communication of two elements. A person of ordinary skill in the art may understand specific meanings of the above-mentioned terms in this application based on the specific situation.

In the present application, the terms "and/or" merely describes the association relationship between the associated objects and indicates that there may be three relationships. For example, A and/or B may indicate three cases where only A exists, A and B exist at the same time, or only B exists. In addition, the character "/" in the present application generally indicates that the associated objects are in an "or" relationship.

Lithium-ion batteries stand out from secondary batteries due to the excellent charging and discharging performance, and are widely applied in the fields of consumer electronics, e-mobility and energy storage. High-energy density is an important development direction of the lithium-ion batteries. In recent years, new energy vehicles have continuously put forward higher requirements on the energy density and cycle life of the lithium-ion batteries. In a case that an existing lithium-ion battery material system cannot make a subversive breakthrough, how to use functional additives to maximize the energy density and cycle life of the lithium-ion batteries has become a key research topic. However, at present, in the first lithium intercalation process of most high-capacity negative electrodes, due to an SEI film and other factors, such as other side reactions, deactivation of negative electrode material particles due to removal and the irreversible deposition of lithium metal, some lithium ions migrated from the positive electrode will be consumed, so that the lithium ions deintercalated from the positive electrode in the first charging process cannot be completely re-intercalated into the positive electrode in the subsequent discharging process, a large amount of active lithium is lost, the first coulombic efficiency of the whole battery is low, the overall capacity of the battery is irreversibly reduced, and the cycle life of the battery is further affected. Furthermore, in the subsequent charging and discharging cycle process of the battery, a large amount of active lithium is lost due to various factors, so that the charging and discharging performance of the expensive positive electrode material cannot be exerted completely, and the quality of the battery is reduced with the increase of the charging and discharging cycles.

In view of this, embodiments of the present application provide a charging control method of a lithium-ion battery. A battery capacity value at each charging is controlled, thereby ensuring the quantity of active lithium unchanged, and achieving the effect of automatically supplementing the battery capacity along with aging.

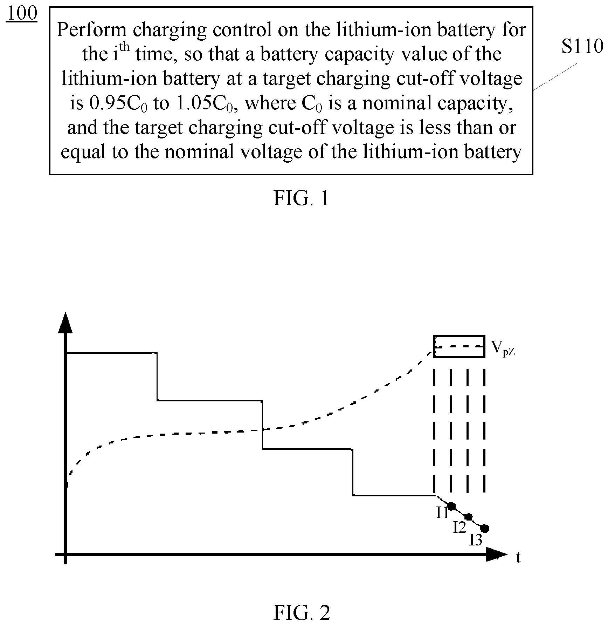

FIG. 1 is a schematic block diagram of a charging control method 100 of a lithium-ion battery according to an embodiment of the present application. It should be understood that the charging control method 100 may be performed by a battery management system (BMS). As shown in FIG. 1, the charging control method 100 may include some or all of the following contents.

S110: perform charging control on the lithium-ion battery for the i^{th} time, so that a battery capacity value of the lithium-ion battery at a target charging cut-off voltage is 0.95C₀ to 1.05C₀, where C₀ is a nominal capacity of the lithium-ion battery, the target charging cut-off voltage is less than or equal to the nominal voltage of the lithium-ion battery, and i takes a value from 1 to N and N is a positive integer greater than 1.

The target charging cut-off voltage may be considered as at least one of a plurality of preset voltage values, that is, the BMS may preset a plurality of voltage values; furthermore, each voltage value of the plurality of voltage values is less than or equal to the nominal voltage of the lithium-ion battery. The BMS may select at least one target charging cut-off voltage from the plurality of voltage values when performing charging control on the lithium-ion battery. It should be noted that when performing charging control on the lithium-ion battery, the BMS may determine whether the battery capacity value of the lithium-ion battery reaches 0.95C₀ to 1.05C₀ according to the order of the at least one target charging cut-off voltage from low to high until the battery capacity value of the lithium-ion battery reaches 0.95C₀ to 1.05C₀, and may stop charging the lithium-ion battery.

Optionally, after the lithium-ion battery is manufactured, the nominal capacity C₀ of the lithium-ion battery may be acquired first, for example, the nominal capacity may be 45 Ah. During each charging of the lithium-ion battery, charging may be cut off when the battery capacity value of the lithium-ion battery may reach 0.95C₀ to 1.05C₀. That is, the battery capacity value of the lithium-ion battery is 0.95C₀ to 1.05C₀ when charging is cut off. It should be noted that the battery capacity value of the lithium-ion battery when charging is cut off includes a charging cumulative capacity when charging is cut off, and further includes a remaining capacity of the lithium-ion battery before charging. That i takes a value from 1 to N refers to: for the charging control from the first time to the N^{th} time, the battery capacity value of the lithium-ion battery when charging is cut off is 0.95C₀ to 1.05C₀.

Therefore, according to the charging control method of the lithium-ion battery provided by the embodiments of the present application, the battery capacity value during each charging is controlled to reach a fixed capacity range, thereby ensuring the quantity of the active lithium unchanged, and achieving the effect of automatically supplementing the battery capacity along with aging.

Optionally, in the embodiments of the present application, the perform charging control on the lithium-ion battery for the i^{th} time, so that a battery capacity value of the lithium-ion battery at a target charging cut-off voltage is 0.95C₀ to 1.05C₀ includes: in a case that a charging voltage of the lithium-ion battery reaches the target charging cut-off voltage, perform charging control on the lithium-ion battery for the i^{th} time in a manner of down-regulating a charging current, so that the battery capacity value of the lithium-ion battery under the target charging cut-off voltage is 0.95C₀ to 1.05C₀.

In this embodiment, in a case that the charging voltage of the lithium-ion battery reaches the target charging cut-off voltage, the lithium-ion battery is charged in a manner of down-regulating the charging current, so that the battery capacity value of the lithium-ion battery under the target charging cut-off voltage is 0.95C₀ to 1.05C₀, which is beneficial to ensuring the quantity of the active lithium unchanged without affecting the normal use of a battery cell body chemical system of the lithium-ion battery and without additionally considering that the electrolyte improves the reliability of the voltage application range for a long time, thereby achieving the effect of automatically supplementing the battery capacity along with aging.

Optionally, in the embodiments of the present application, a positive electrode of the lithium-ion battery includes a lithium-supplementing material.

Due to the presence of inevitable and irreversible lithium loss during the use of the lithium-ion battery, lithium may be supplemented to the positive electrode or negative electrode of the lithium-ion battery. Lithium supplementation for the positive electrode may be achieved by directly adding the lithium-supplementing material in the homogenizing process of positive electrode slurry without additional process improvement and with low cost, so lithium supplementation for the positive electrode is more suitable for an existing manufacturing process of the lithium-ion battery and is known as the most promising lithium-supplementing technology.

However, the current lithium supplementation for the positive electrode is usually achieved by adding the lithium-supplementing material in the positive electrode and then decomposing the lithium-supplementing material by a voltage to supplement the lithium to the lithium-ion battery. However, the solution has great defects. If the lithium-supplementing amount is too large at one time, it is prone to cause lithium precipitation at the negative electrode. If the lithium-supplementing amount is too small, the expected effect cannot be achieved. Therefore, how to supplement the lithium pertinently is very important.

In this embodiment, the positive electrode of the lithium-ion battery includes the lithium-supplementing material, so that the lithium-ion battery can slowly release active lithium in the charging process, the battery capacity value of the lithium-ion battery during each charging can reach a fixed range, and the quantity of active lithium can be ensured to be unchanged, thereby achieving the effect of automatically supplementing the battery capacity along with aging.

Optionally, in the embodiments of the present application, the lithium-supplementing material has the characteristic of a voltage platform area; and the voltage platform area of the lithium-supplementing material refers to: a charging and discharging test is performed on the lithium-supplementing material under the nominal voltage of the lithium-ion battery, and the obtained charging curve of the lithium-supplementing material meets that a slope of the charging curve with at least a cumulative SOC ratio greater than or equal to 40% is less than or equal to 15mV/1% SOC.

Specifically, after the lithium-ion battery is manufactured, the nominal voltage of the lithium-ion battery may be acquired, and the nominal voltage refers to a charging range of the lithium-ion battery, for example, 2.5 V to 3.7 V. overcharging may occur if the charging voltage is higher than 3.7 V, and undercharging may occur if the charging voltage is lower than 2.5 V. After the nominal voltage of the lithium-ion battery is obtained, the lithium-supplementing material included in the lithium-ion battery may be subjected to the charging and discharging test, and the charging curve of the lithium-supplementing material may be obtained. The charging curve may represent a relationship between a voltage and a discharging capacity, and the discharging capacity has a linear relationship with a stage of charge (SOC), that is, the discharging curve may represent a relationship between the voltage and the SOC. In a case that the charging curve of the lithium-supplementing material meets that the slope of the charging curve with at least a cumulative SOC ratio greater than or equal to 40% is less than or equal to 15mV/1% SOC, that is, ΔV/ΔSOC≤15mV/1%SOC, it may be considered that the lithium-supplementing material has the characteristic of the voltage platform area.

There are two ways to control the battery capacity value of the lithium-ion battery under the target charging cut-off voltage to be 0.95C₀ to 1.05C₀ according to whether the lithium-supplementing material has the characteristic of the voltage platform area. In one example, for the lithium-supplementing material without the characteristic of the voltage platform area, to ensure that the battery capacity value of the lithium-ion battery under the target charging cut-off voltage reaches 0.95C₀ to 1.05C₀, the charging cut-off voltage can be increased continuously, so that the lithium-supplementing material in the positive electrode of the lithium-ion battery can slowly release lithium ions to compensate the capacity loss of the lithium-ion battery.

In another example, for the lithium-supplementing material with the characteristic of the voltage platform area, in a case that the charging voltage of the lithium-ion battery reaches the target charging cut-off voltage, since the charging cut-off voltage cannot be increased, to ensure that the battery capacity value of the lithium-ion battery reaches 0.95C₀ to 1.05C₀, the lithium-ion battery can be charged by continuously down-regulating the charging current.

Optionally, in the embodiments of the present application, the target charging cut-off voltage of the lithium-ion battery may be close to the voltage platform area of the lithium-supplementing material, for example, the target charging cut-off voltage V_{c} is equal to the voltage platform area V_{PZ}±0.5V.

FIG. 2 is a schematic diagram of a charging cumulative capacity of a lithium-ion battery of a lithium-supplementing material with voltage platform area characteristics according to an embodiment of the present application; As shown in FIG. 2, the lithium-supplementing material includes a voltage platform area V_{PZ}, and the charging current is reduced continuously in a case that the charging voltage of the lithium-ion battery reaches the target charging cut-off voltage (that is, close to the voltage platform area V_{PZ}). That is, in FIG. 2, I1 is greater than I2, and I2 is greater than I3. FIG. 2 shows that the case where the minimum charging current under the target charging cut-off voltage is I3 is taken as an example, but the charging current may be adjusted according to respective required scenarios. The embodiments of the present application do not limit how many times the charging current is reduced in the voltage platform area V_{PZ}.

For the technical solution that the upper limit of the charging voltage is continuously increased to ensure that the battery capacity of the lithium-ion battery at each charging cut-off reaches the nominal capacity C₀ of the lithium-ion battery, the higher the voltage is, the more unstable the electrolyte is. Interface reaction occurs between the positive electrode material and the electrolyte, including low oxidability, so the chemical system is over-designed at the beginning, or the performance is poor at the later stage. In this embodiment, in a case that the charging voltage of the lithium-ion battery reaches the target charging cut-off voltage (that is, close to the voltage platform area V_{PZ}), the lithium-ion battery is charged in a manner of down-regulating the charging current, so that the battery capacity value of the lithium-ion battery can reach 0.95C₀ to 1.05C₀. Therefore, the lithium ions can be released slowly without affecting the normal use of a battery cell body chemical system of the lithium-ion battery and without additionally considering that the electrolyte improves the reliability of the voltage application range for a long time, thereby achieving the effect of automatically supplementing the battery capacity along with aging.

Optionally, in the embodiments of the present application, the charging control method 100 further includes: determine an open capacity of the lithium-ion battery according to at least one of a test precision of a state of charge (SOC) of the lithium-ion battery, a calculation error of a state of health (SOH), an aging model state of a running throughput, an excess state of an N/P ratio of a negative electrode capacity per unit area/a positive electrode capacity per unit area, and a system prediction error of a battery management system (BMS), where the open capacity is used to indicate a capacity that is required to be compensated for the lithium-ion battery; and according to the open capacity, determine whether to perform charging control on the lithium-ion battery for the i^{th} time in a manner of down-regulating the charging current in a case that the charging voltage of the lithium-ion battery reaches the target charging cut-off voltage.

The open capacity is used to indicate a capacity that is required to be compensated for the lithium-ion battery, or may indirectly indicate the lost capacity of the lithium-ion battery. For example, the capacity of the lithium-ion battery is reduced from 45 Ah to 40 Ah after a period of use, that is, if the battery capacity of the lithium-ion battery is still 45 Ah at the next charging cut-off, the lithium-supplementing material is required to release the lithium ions, so that the battery capacity is supplemented by 5 Ah, that is, the open capacity in an ideal state is 5 Ah. However, it is also necessary to comprehensively consider the conservative open capacity according to at least one of the test precision of the state of charge (SOC) of the lithium-ion battery, the calculation error of the state of health (SOH), the aging model state of the running throughput capacity, the excess state of the N/P ratio of the negative electrode capacity per unit area/the positive electrode capacity per unit area, and the system prediction error of a battery management system (BMS). Further, according to the open capacity, it may be determined whether to perform charging control on the lithium-ion battery in a manner of down-regulating the charging current in a case that the charging voltage of the lithium-ion battery reaches the target charging cut-off voltage. For example, if the open capacity is 5 Ah, and the open precision which is required to be updated or released and is designed by a battery cell system and/or confirmed by the BMS prediction precision is 8 Ah, it may be determined that the charging current is not reduced when the charging voltage of the lithium-ion battery reaches the target charging cut-off voltage. For another example, if the open capacity is 5 Ah, and the open precision which is required to be updated or released and is designed by a battery cell system and/or confirmed by the BMS prediction precision is 3 Ah, it may be determined that the charging current is reduced when the charging voltage of the lithium-ion battery reaches the target charging cut-off voltage.

In this embodiment, the open capacity of the lithium-ion battery is determined according to at least one of the test precision of the state of charge (SOC) of the lithium-ion battery, the calculation error of the state of health (SOH), the aging model state of the running throughput capacity, the excess state of the N/P ratio of the negative electrode capacity per unit area/the positive electrode capacity per unit area, and the system prediction error of a battery management system (BMS), and it is further determined whether to reduce the charging current in a case that the charging voltage of the lithium-ion battery reaches the target charging cut-off voltage, so that the safety performance of the lithium-ion battery still can be ensured even under the condition of the maximum deviation.

Optionally, in the embodiments of the present application, the lithium-supplementing material includes a first voltage platform area. The charging control method 100 further includes: in the i^{th} charging control, acquire a minimum charging current of the lithium-ion battery under a first target charging cut-off voltage; and S150: in a case that the minimum charging current is less than a current threshold, determine whether the battery capacity value of the lithium-ion battery reaches 0.95C₀ to 1.05C₀, where V_{c1}=Vₚ₁±0.5V, V_{c1} is the first target charging cut-off voltage, and V_{pz1} is the first voltage platform area.

In other words, it may be determined whether to stop charging according to the minimum charging current of the lithium-ion battery under the first target charging cut-off voltage. For example, the current threshold is 0.05C₀. If the minimum charging current at the first voltage platform area is greater than or equal to 0.05C₀, the lithium-ion battery may be charged continuously. If the minimum charging current under the first target charging cut-off voltage is less than 0.05C₀, it may be further determined whether the battery capacity of the lithium-ion battery reaches 0.95C₀ to 1.05C₀, that is, it is determined whether to reach the charging cut-off condition. Charging is stopped in a case that it is determined that the battery capacity of the lithium-ion battery has reached 0.95C₀ to 1.05C₀.

Optionally, in the embodiments of the present application, the current threshold is greater than or equal to 0.01C₀. Further, the current threshold is greater than or equal to 0.05C₀. It should be understood that the setting of the current threshold is required to consider the effectiveness of depolarization and the acceptable charging time of customers.

Optionally, the lithium-supplementing material further includes a second voltage platform area. The charging control method 100 further includes: in a case of determining that the battery capacity value does not reach 0.95C₀ to 1.05C₀ when the charging voltage of the lithium-ion battery reaches the first target charging cut-off voltage, control the charging voltage of the lithium-ion battery to reach a second target charging cut-off voltage, where V_{c2}=V_{pz2}±0.5V, V_{c2} is the second target charging cut-off voltage, and V_{pz2} is the second voltage platform area.

That is, the lithium-supplementing material includes a plurality of voltage platform areas, the charging voltage may be continuously increased to a second target charging cut-off voltage (that is, close to a second voltage platform area) in a case that the battery capacity still does not reach 0.95C₀ to 1.05C₀ when the minimum charging current under the first target charging cut-off voltage (that is, close to the first voltage platform area) is less than the current threshold. For an interval which is greater than the first target charging cut-off voltage but less than the second target cut-off voltage, stepped charging or conventional ratio charging may be adopted.

However, for the lithium-supplementing material with only one voltage platform area, the battery capacity value still does not reach 0.95C₀ to 1.05C₀ when the minimum charging current under the first target charging cut-off voltage (that is, close to the first voltage platform area) is less than the current threshold, and at this time, stepped charging or conventional ratio charging only can be entered, that is, a capacity-fading charging mode is entered.

In this embodiment, the lithium-supplementing material with the plurality of voltage platform areas is selected, so that the lithium ions in the lithium-supplementing material can be released slowly, and the battery capacity value of the lithium-ion battery during charging cut-off can reach 0.95C₀ to 1.05C₀ as much as possible, thereby ensuring the quantity of the active lithium unchanged, and achieving the effect of automatically supplementing the battery capacity along with aging.

It should be noted that in the embodiments of the present application, no matter how many voltage platform areas the lithium-supplementing material has, a plurality of target charging cut-off voltages close to the plurality of voltage platform areas may be set, and the lithium-ion battery is subjected to charging control in a manner of down-regulating the charging current under the plurality of target charging cut-off voltages.

Optionally, in one embodiment, the first voltage platform area and the second platform area belong to a same lithium-supplementing material, that is, the positive electrode of the lithium-ion battery includes a lithium-supplementing material. The lithium-supplementing material has a plurality of voltage platform areas, for example, Li₅FeO₄, and Li₂C₃O₅.

Optionally, in another embodiment, the first voltage platform area and the second platform area belong to different lithium-supplementing materials. That is, the lithium-ion battery includes at least two lithium-supplementing materials, where one lithium-supplementing material has a first voltage platform area, and the other lithium-supplementing material has a second voltage platform area, for example, a lithium sulfide/transition metal composite (Li2S/Co), a lithium fluoride/transition metal composite (LiF/Co) and lithium oxide/transition metal composite (Li2O/Co).

Optionally, in the embodiments of the present application, the acquire a minimum charging current of the lithium-ion battery under a first target charging cut-off voltage includes: determine a minimum charging current under the first target charging cut-off voltage according to a charging cumulative capacity (C), a state of charge (SOC) and a state of health (SOH) of the lithium-ion battery.

That is, the minimum charging current under the target charging cut-off voltage is related to the charging cumulative capacity (C), the SOC and the SOH. The SOC is predicted through the continuously obtained open circuit voltage (OCV) when the lithium-ion battery is charged; furthermore, the BMS may also predict the state of health (SOH) of the lithium-ion battery; and further, the minimum charging current under the target charging cut-off current is determined according to a function relationship among the charging cumulative capacity (C), the state of charge (SOC) and the state of health (SOH).

Optionally, the determine a minimum charging current of the lithium-ion battery under a first target charging cut-off voltage includes: determine the charging cumulative capacity (C) according to the following formula: C=C₀-SOH*C₀*SOC; and S2412: determine the minimum charging current under the first target charging cut-off voltage according to the charging cumulative capacity (C).

That is, the minimum charging current under the first target charging cut-off voltage may be recorded according to the charging cumulative capacity (C) of the lithium-ion battery.

Optionally, in the embodiments of the present application, the N/P ratio of the negative electrode capacity per unit area/the positive electrode capacity per unit area of the lithium-ion battery ranges from 0.5 to 1.5.

In general, the N/P ratio of the lithium-ion battery is greater than 1.1, which is a design attribute and is related to safety boundary value and a process/ an incoming material fluctuation. In the embodiments of the present application, the lithium-supplementing material is doped in the positive electrode of the lithium-ion battery, and the lithium ions in the lithium-supplementing material are released slowly through charging control, so that the N/P ratio can be less than 1.5. However, the smaller the N/P ratio is, the lower the use amount of the negative electrode is (the positive electrode provides a capacity, and the negative electrode serves as a design adjoint variable), so that the demand of graphite can be effectively saved, the cost can be reduced, and the energy density in a limited shell can be improved.

Further, in the embodiments of the present application, the N/P ratio ranges from 0.6 to 1.4.

Further, the N/P ratio ranges from 0.8 to 1.05.

Optionally, in the embodiments of the present application, the lithium-supplementing material includes at least one of the following materials: Li₃N, Li₂S/Co, LiF/Co, Li₂O/Co, Li₂O₂, Li₂NiO₂, Li₅FeO₄, Li₂C₂O₄, Li₂C₄O₄, Li₂C₃O₅, and Li₂C₄O₆.

In this embodiment, the lithium-supplementing material with the voltage platform area is selected, so that the lithium-supplementing material can slowly release lithium ions in the charging control of the lithium-ion battery, and the battery capacity of the lithium-ion battery under the target charging cut-off voltage can reach 0.95C₀ to 1.05C₀ as much as possible without affecting the normal use of a battery cell body chemical system of the lithium-ion battery and without additionally considering that the electrolyte improves the reliability of the voltage application range for a long time, thereby achieving the effect of automatically supplementing the battery capacity along with aging.

Optionally, in one example, a positive electrode material of the lithium-ion battery is lithium manganese iron phosphate (LMFP), and the lithium-supplementing material is Li₂C₄O₄.

Optionally, in another example, a positive electrode material of the lithium-ion battery is lithium iron phosphate (LFP), and the lithium-supplementing material is LiF/Co.

Optionally, in the embodiments of the present application, an absolute value of a difference value between a working voltage of the lithium-ion battery and the nominal voltage of the lithium-ion battery is less than or equal to 500 mV.

In this embodiment, the absolute value of the difference value between the working voltage of the lithium-ion battery and the nominal voltage of the lithium-ion battery is set to be less than or equal to 500 mV, thereby facilitating the compatibility of the electrolyte on an active material and the lithium-supplementing material.

Optionally, in the embodiments of the present application, a positive electrode material of the lithium-ion battery is at least one of the following materials: nickel cobalt manganese, nickel cobalt aluminum, nickel manganese spinel, a lithium-rich manganese-based material, lithium iron phosphate, lithium manganese iron phosphate, lithium vanadium phosphate, lithium manganese phosphate, lithium nickel phosphate, and lithium manganate.

The preparation process and the test process of the lithium-ion battery according to the embodiments of the present application are described below in details.

Preparation of the lithium-ion battery:
1. Preparation of a positive electrode plate: positive electrode active materials (including a main material and a lithium-supplementing agent, taking NCM as an example (NCM523), the lithium-supplementing agent takes LiF/Co as an example, and the lithium source ratio of the lithium-supplementing agent is 10%), a conductive agent acetylene black and an adhesive polyvinylidene fluoride (PVDF) were mixed uniformly according to a mass ratio of 96:2:2, and were added into a solvent NMP to prepare positive electrode slurry; and a positive electrode current collector aluminum foil was uniformly coated with the positive electrode slurry and was dried at 85°C, and cold pressing, die cutting and slitting were performed to prepare the positive electrode plate of the lithium-ion battery.
2. Preparation of a negative electrode plate: a negative electrode active material graphite, a conductive agent acetylene black, a thickening agent carboxymethyl cellulose sodium (CMC) and an adhesive butadiene styrene rubber (SBR) were added into solvent water according to a mass ratio of 96:2: 1: 1 to be mixed uniformly and prepare negative electrode slurry; and a negative electrode current collector copper foil was uniformly coated with the negative electrode slurry and was dried at 85°C, and cold pressing was performed to prepare the negative electrode plate of the lithium-ion battery.
3. Preparation of an isolating film: a polyethylene microporous film was taken as a porous isolating film base material, inorganic aluminum trioxide powder, polyvinylpyrrolidone and an acetone solvent were mixed uniformly according to a weight ratio of 3: 1.5:5.5 to prepare slurry, and one side of the base material was coated with the slurry to obtain the isolating film.
4. Preparation of an electrolyte: lithium hexafluorophosphate was dissolved into a mixed solvent of ethylene carbonate, dimethyl carbonate and ethyl methyl carbonate (the adding amount of the lithium hexafluorophosphate is 1 mol/L, and the volume ratio of the ethylene carbonate to the dimethyl carbonate to the ethyl methyl carbonate is 1:2:1) to obtain the electrolyte of the lithium-ion battery.
5. Preparation of the lithium-ion battery: the positive electrode plate, the negative electrode plate and the isolating film were wound to obtain a bare battery, and the battery used in the embodiments was prepared through the processes of encapsulation, liquid injection, formation and exhausting, where the N/P of the battery is equal to 1, and the designed nominal capacity C₀ of the battery is 45 Ah.

Test of the lithium-ion battery:
the charging and discharging process (the nominal capacity C₀ is 45 Ah):
1. standing was performed for 10 min;
2. 0.33C discharging was performed to a cut-off voltage V0;
3. standing was performed for 10 min;
4. 0.33C constant-current charging was performed to a target voltage V1, and constant-pressure charging was continuously adopted, where the cut-off condition is: ① the cumulative battery capacity is 45 Ah, or I≤0.05 C₀ (n is unified to be equal to 0.05);
5. standing was performed for 10 min;
6. 0.33C discharging was performed to a cut-off voltage V0 (the second discharging capacity was recorded as C₀);
7. standing was performed for 10 min;
8. steps 4) to 7) were cycled, and the cycle test m was recorded; and
9. in a case that m≥2000cls or Cm/C0≤90%, the test was stopped.

Table 1 shows the test result of the embodiments of different combinations of the positive electrode material and the lithium-supplementing material.

**Table 1**

| Case | Positive Electrode Material | Lithium-supplementing Material | Lithium Source ratio of Lithium-supplementing Agent | Cut-off Voltage V1 | Capacity Retention Rate (Cycling 500 cls at 25°C) |
|---|---|---|---|---|---|
| Embodiment 1 | NCM523 | Li3N | 10% | 4.5V | 97.50% |
| Embodiment 2 | NCM523 | LiF/Co | 10% | 4.2V | 99.30% |
| Embodiment 3 | NCM523 | Li2O/Co | 10% | 4.1V | 99.50% |
| Embodiment 4 | NCM523 | Li2C2O4 | 10% | 4.9V | 91.00% |
| Embodiment 5 | LFP | Li2S/Co | 10% | 3.75V | 99.70% |
| Embodiment 6 | LMFP | Li2C4O4 | 10% | 4.35V | 99.20% |
| Embodiment 7 | LMFP | Li2C3O5 | 10% | 4.25V | 99.80% |
| Embodiment 8 | LMFP | Li2C4O6 | 10% | 4.35V | 99.50% |

It should be understood that, the serial number of each process of various embodiments does not indicate the order of performing the process. The order of performing each process should be determined by its function and internal logic, and shall not limit the implementation of the embodiments of the present application.

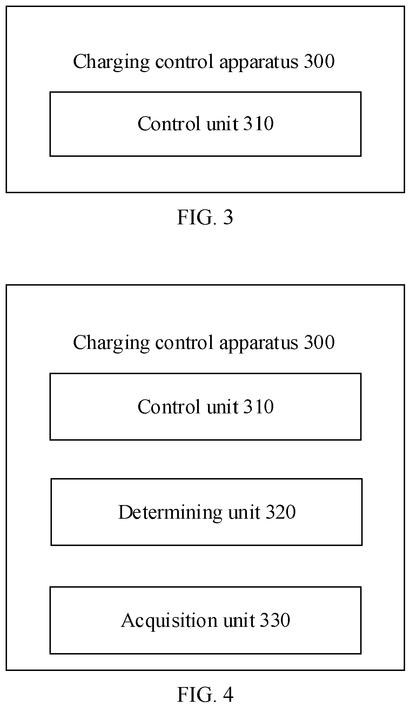

The charging method of the battery according to the embodiments of the present application is described above in detail. The charging control method of the lithium-ion battery according to the embodiments of the present application is described in detail with reference to FIG. 3 to FIG. 5. The technical feature described in the method embodiment is suitable for the following apparatus embodiment.

FIG. 3 is a schematic block diagram of a charging control apparatus 300 of a lithium-ion battery according to an embodiment of the present application. As shown in FIG. 3, the charging control apparatus 300 may include some or all of the following contents.

A control unit 310 is configured to: perform charging control on the lithium-ion battery for the i^{th} time, so that a battery capacity value of the lithium-ion battery at a target charging cut-off voltage is 0.95C₀ to 1.05C₀, C₀ being a nominal capacity of the lithium-ion battery, the target charging cut-off voltage being less than or equal to the nominal voltage of the lithium-ion battery; wherein i takes a value from 1 to N and N is a positive integer greater than 1.

Optionally, in the embodiments of the present application, the control unit 310 is specifically configured to: in a case that a charging voltage of the lithium-ion battery reaches the target charging cut-off voltage, perform charging control on the lithium-ion battery for the i^{th} time in a manner of down-regulating a charging current, so that the battery capacity value of the lithium-ion battery under the target charging cut-off voltage is 0.95C₀ to 1.05C₀.

Optionally, in the embodiments of the present application, a positive electrode of the lithium-ion battery includes a lithium-supplementing material.

The lithium-supplementing material has the characteristic of a voltage platform area, and the voltage platform area of the lithium-supplementing material refers to: a charging and discharging test is performed on the lithium-supplementing material under the nominal voltage of the lithium-ion battery, and the obtained charging curve of the lithium-supplementing material meets that a slope of the charging curve with at least a cumulative SOC ratio greater than or equal to 40% is less than or equal to 15mV/1% SOC.

Optionally, as shown in FIG. 4, the charging control apparatus 300 further includes: a determining unit 320, configured to: determine an open capacity of the lithium-ion battery according to at least one of a test precision of a state of charge (SOC) of the lithium-ion battery, a calculation error of a state of health (SOH), an aging model state of a running throughput, an excess state of an N/P ratio of a negative electrode capacity per unit area/a positive electrode capacity per unit area, and a system prediction error of a battery management system (BMS), wherein the open capacity is used to indicate a capacity that is required to be compensated for the lithium-ion battery; and according to the open capacity, determine whether to perform charging control on the lithium-ion battery for the i^{th} time in a manner of down-regulating the charging current in a case that the charging voltage of the lithium-ion battery reaches the target charging cut-off voltage.

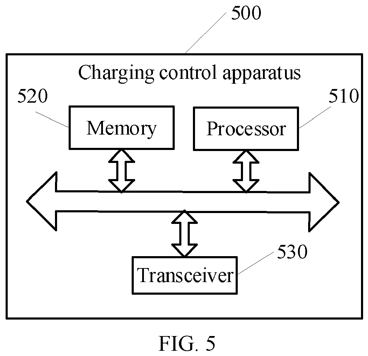

Optionally, the lithium-supplementing material includes a first voltage platform area. As shown in FIG. 5, the charging control apparatus 300 further includes: an acquisition unit 330, configured to: in the i^{th} charging control, acquire a minimum charging current of the lithium-ion battery under a first target charging cut-off voltage; and the determining unit 320 is further configured to: in a case that the minimum charging current is less than a current threshold, determine whether the battery capacity value of the lithium-ion battery reaches 0.95C₀ to 1.05C₀.

Optionally, in the embodiments of the present application, the lithium-supplementing material further includes a second voltage platform area. The control unit 310 is further configured to: in a case of determining that the battery capacity value does not reach 0.95C₀ to 1.05C₀ when the charging voltage of the lithium-ion battery reaches the first target charging cut-off voltage, control the charging voltage of the lithium-ion battery to reach a second target charging cut-off voltage, where V_{c2}=V_{pz2}±0.5V, V_{c2} is the second target charging cut-off voltage, and V_{pz2} is the second voltage platform area.

Optionally, in the embodiments of the present application, the first voltage platform area and the second platform area belong to a same lithium-supplementing material.

Optionally, in the embodiments of the present application, the first voltage platform area and the second platform area belong to different lithium-supplementing materials.

Optionally, in the embodiments of the present application, the current threshold is greater than or equal to 0.01 C₀.

Optionally, in the embodiments of the present application, the current threshold is greater than or equal to 0.05C₀.

Optionally, in the embodiments of the present application, the acquisition unit 330 is specifically configured to: determine a minimum charging current under the first target charging cut-off voltage according to a charging cumulative capacity (C), a state of charge (SOC) and a state of health (SOH) of the lithium-ion battery.

Optionally, in the embodiments of the present application, the determining unit 320 is specifically configured to: determine the charging cumulative capacity (C) according to the following formula: C=C₀-SOH*C₀*SOC; and determine the minimum charging current under the first target charging cut-off voltage according to the charging cumulative capacity (C).

Optionally, in the embodiments of the present application, the N/P ratio of the negative electrode capacity per unit area/the positive electrode capacity per unit area of the lithium-ion battery ranges from 0.5 to 1.5.

Optionally, in the embodiments of the present application, the N/P ratio ranges from 0.6 to 1.4.

Optionally, in the embodiments of the present application, the lithium-supplementing material includes at least one of the following materials: Li3N, Li2S/Co, LiF/Co, Li2O/Co, Li2O2, Li2NiO2, Li5FeO4, Li2C2O4, Li2C4O4, Li2C3O5 and Li₂C₄O₆.

Optionally, in the embodiments of the present application, a positive electrode material of the lithium-ion battery is lithium manganese iron phosphate (LMFP), and the lithium-supplementing material is Li2C4O4.

Optionally, in the embodiments of the present application, a positive electrode material of the lithium-ion battery is lithium iron phosphate (LFP), and the lithium-supplementing material is LiF/Co.

Optionally, in the embodiments of the present application, a positive electrode of the lithium-ion battery adopts at least one of the following materials: nickel cobalt manganese, nickel cobalt aluminum, nickel manganese spinel, a lithium-rich manganese-based Material lithium iron phosphate, lithium manganese iron phosphate, lithium vanadium phosphate, lithium manganese phosphate, lithium nickel phosphate, and lithium manganate.

Optionally, in the embodiments of the present application, an absolute value of a difference value between a working voltage of the lithium-ion battery and the nominal voltage of the lithium-ion battery is less than or equal to 500 mV.

It should be understood that the charging control apparatus 300 according to the embodiments of the present application may be configured to perform the process in the method shown in FIG. 1. For brevity, details are not repeated herein again.

FIG. 5 is a schematic block diagram of a charging control apparatus 500 of a battery according to an embodiment of the present application. The charging control apparatus 500 is applied to a swapping station. As shown in FIG. 5, the charging control apparatus 500 includes a processor 510 and a memory 520, where the memory 520 is configured to store an instruction; and the processor 510 is configured to read the instruction and perform the method according to various embodiments of the present application based on the instruction.

The memory 520 may be a separate device independent of the processor 510, or may be integrated in the processor 510.

Optionally, as shown in FIG. 5, the charging control apparatus 500 may further include a transceiver 530; and the processor 510 may control the transceiver 530 to communicate with other devices. Specifically, information or data may be transmitted to other devices, or information or data transmitted by other devices may be received.

Optionally, the embodiments of the present application further provide a chip, including a processor, configured to call and run a computer program from the memory, so that a device installed with the chip can perform the corresponding process in each method of the embodiments of the present application. For brevity, details are not repeated herein again.

It should be understood that the processor according to the embodiments of the present application may be an integrated circuit chip, and has a signal processing capability. During the implementation, the steps of the foregoing method embodiment may be performed through an integrated logic circuit of hardware in a processor or through instructions in the form of software. The processor may be a general-purpose processor, a digital signal processor (DSP), an application specific integrated circuit (ASIC), a field programmable gate array (FPGA), or other programmable logic devices, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor. Steps of the methods disclosed with reference to the embodiments of this application may be directly performed and completed through a hardware decoding processor, or may be performed and completed by using a combination of hardware and software modules in the decoding processor. The software module may be located in a mature storage medium in this field, such as a random access memory, a flash memory, a read-only memory, a programmable read-only memory or an electrically erasable programmable memory, or a register. The storage medium is located in the memory. The processor reads information in the memory, and completes steps of the foregoing method in combination with hardware of the processor.

It may be understood that the memory in this embodiment of this application may be a volatile memory or a nonvolatile memory, or may include both a volatile memory and a nonvolatile memory. The nonvolatile memory may be a read-only memory (ROM), a programmable read-only memory (programmable ROM, PROM), an erasable programmable read-only memory (erasable ROM, EPROM), an electrically erasable programmable read-only memory (electrically EPROM, EEPROM), or a flash memory. The volatile memory may be a random access memory (RAM), and is used as an external cache. As exemplary but not limitative descriptions, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described in the specification is intended to include, but is not limited to, these and any other suitable types of memories.

The embodiments of the present application further provide a computer-readable storage medium, configured to store a computer program.

Optionally, the computer-readable storage medium may be applied to the charging control apparatus in the embodiments of the present application, and the computer program enables the computer to perform the corresponding processes, implemented by the charging control apparatus, of various methods according to the embodiments of the present application. For brevity, details are not repeated herein again.

The embodiments of the present application further provide a computer program product, including a computer program instruction.

Optionally, the computer program product may be applied to the charging control apparatus in the embodiments of the present application, and the computer program instruction enables the computer to perform the corresponding processes, implemented by the charging control apparatus, of various methods according to the embodiments of the present application. For brevity, details are not repeated herein again.

The embodiments of the present application further provide a computer program.

Optionally, the computer program may be applied to the charging control apparatus in the embodiments of the present application. When running on the computer, the computer program enables the computer to perform the corresponding processes, implemented by the charging control apparatus, of various methods according to the embodiments of the present application. For brevity, details are not repeated herein again.

Those of ordinary skill in the art may realize that the exemplary units and algorithm steps described with reference to the embodiments disclosed in this specification can be implemented by electronic hardware or a combination of computer software and electronic hardware. Whether these functions are performed by using hardware or software depends on a specific application and design constraints of the technical solution. A person skilled in the art may use different methods to implement the described functions for each particular application, but it is to be not considered that the implementation goes beyond the scope of this application.

It may be clearly understood by a person skilled in the art that, for the purpose of convenient and brief description, for a detailed operating process of the foregoing system, device, and unit, refer to a corresponding process in the foregoing method embodiments. Details are not described herein again.

In several examples provided herein, it should be understood that the disclosed system, apparatus, and method may be implemented in other manners. For example, the embodiments of the apparatus described above are only schematic, for example, division into the units is only logical function division. There may be other division manners in actual implementation, for example, multiple units or components may be combined or integrated into other systems, or some features may be ignored or not performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separated, and parts shown as units may or may not be physical units, that is, may be located in one location, or may be distributed on multiple network units. Some or all of the units may be selected according to actual needs to achieve the objective of the solutions of the embodiments.

In addition, functional units in the embodiments of the present application may be integrated into one processing unit, or each of the units may exist alone physically, or two or more units are integrated into one unit.

The functions, if implemented in the form of a software functional unit and sold or used as a stand-alone product, may be stored in a computer-readable storage medium. Based on this understanding, the technical solution of the present application essentially, or a part contributing to the prior art, or a part of the technical solution may be embodied in a form of a software product. The computer software product is stored on a storage medium, and includes several instructions for enabling a computer device (may be a personal computer, a server, or a network device) to perform all or some steps of the method according to various embodiments of the present application. The storage medium includes various media that may store a program code such as a USB flash disk, a mobile hard disk, a ROM, a RAM, a magnetic disk, an optical disc, or the like.

The above merely describes specific embodiments of the present application, but the protection scope of the present application is not limited thereto. Any person skilled in the art can easily conceive modifications or replacements within the technical scope of the present application, and these modifications or replacements shall fall within the protection scope of the present application. Therefore, the protection scope of the present application should be subject to the protection scope of the claims.

## Claims

1. A charging control method of a lithium-ion battery, comprising:
performing charging control on the lithium-ion battery for the i^{th} time, so that a battery capacity value of the lithium-ion battery at a target charging cut-off voltage is 0.95C₀ to 1.05C₀, C₀ being a nominal capacity of the lithium-ion battery, the target charging cut-off voltage being less than or equal to the nominal voltage of the lithium-ion battery;
wherein i takes a value from 1 to N and N is a positive integer greater than 1.

2. The charging control method according to claim 1, wherein the performing charging control on the lithium-ion battery for the i^{th} time, so that a battery capacity value of the lithium-ion battery at a target charging cut-off voltage is 0.95C₀ to 1.05C₀ comprises:
in a case that a charging voltage of the lithium-ion battery reaches the target charging cut-off voltage, performing charging control on the lithium-ion battery for the i^{th} time in a manner of down-regulating a charging current, so that the battery capacity value of the lithium-ion battery under the target charging cut-off voltage is 0.95C₀ to 1.05C₀.

3. The charging control method according to claim 2, wherein a positive electrode of the lithium-ion battery comprises a lithium-supplementing material.

4. The charging control method according to claim 3, wherein the lithium-supplementing material has the characteristic of a voltage platform area, and the voltage platform area of the lithium-supplementing material refers to: a charging and discharging test is performed on the lithium-supplementing material under the nominal voltage of the lithium-ion battery, and the obtained charging curve of the lithium-supplementing material meets that a slope of the charging curve with at least a cumulative state of charge (SOC) ratio greater than or equal to 40% is less than or equal to 15mV/1% SOC.

5. The charging control method according to claim 4, further comprising:
determining an open capacity of the lithium-ion battery according to at least one of a test precision of a state of charge (SOC) of the lithium-ion battery, a calculation error of a state of health (SOH), an aging model state of a running throughput, an excess state of an N/P ratio of a negative electrode capacity per unit area/a positive electrode capacity per unit area, and a system prediction error of a battery management system (BMS), wherein the open capacity is used to indicate a capacity that is required to be compensated for the lithium-ion battery; and
according to the open capacity, determining whether to perform charging control on the lithium-ion battery for the i^{th} time in a manner of down-regulating the charging current in a case that the charging voltage of the lithium-ion battery reaches the target charging cut-off voltage.

6. The charging control method according to claim 5, wherein the lithium-supplementing material comprises a first voltage platform area, and the charging control method further comprises:
in the i^{th} charging control, acquiring a minimum charging current of the lithium-ion battery under a first target charging cut-off voltage; and
in a case that the minimum charging current is less than a current threshold, determining whether the battery capacity value of the lithium-ion battery reaches 0.95C₀ to 1.05C₀;
wherein V_{c1}=V_{pz1}±0.5V, V_{c1} is the first target charging cut-off voltage, and V_{pz1} is the first voltage platform area.

7. The charging control method according to claim 6, wherein the lithium-supplementing material further comprises a second voltage platform area, and the charging control method further comprises:
in a case of determining that the battery capacity value does not reach 0.95C₀ to 1.05C₀ when the charging voltage of the lithium-ion battery reaches the first target charging cut-off voltage, controlling the charging voltage of the lithium-ion battery to reach a second target charging cut-off voltage;
wherein V_{c2}=V_{pz2}±0.5V, V_{c2} is the second target charging cut-off voltage, and V_{pz2} is the second voltage platform area.

8. The charging control method according to claim 7, wherein the first voltage platform area and the second voltage platform area belong to a same lithium-supplementing material.

9. The charging control method according to claim 7, wherein the first voltage platform area and the second voltage platform area belong to different lithium-supplementing materials.

10. The charging control method according to any one of claims 6 to 9, wherein the current threshold is greater than or equal to 0.01C₀.

11. The charging control method according to claim 10, wherein the current threshold is greater than or equal to 0.05C₀.

12. The charging control method according to any one of claims 6 to 11, wherein the acquiring a minimum charging current of the lithium-ion battery under a first target charging cut-off voltage comprises:
determining a minimum charging current under the first target charging cut-off voltage according to a charging cumulative capacity (C), a state of charge (SOC) and a state of health (SOH) of the lithium-ion battery.

13. The charging control method according to claim 12, wherein the determining a minimum charging current under the first target charging cut-off voltage according to a charging cumulative capacity (C), a state of charge (SOC) and a state of health (SOH) of the lithium-ion battery comprises:
determining the charging cumulative capacity (C) according to the following formula:
C=C₀-SOH*C₀*SOC; and
determining the minimum charging current under the first target charging cut-off voltage according to the charging cumulative capacity (C).

14. The charging control method according to any one of claims 3 to 13, wherein an N/P ratio of a negative electrode capacity per unit area/a positive electrode capacity per unit area of the lithium-ion battery ranges from 0.5 to 1.5.

15. The charging control method according to claim 14, wherein the N/P ratio ranges from 0.6 to 1.4.

16. The charging control method according to any one of claims 3 to 15, wherein the lithium-supplementing material comprises at least one of the following materials: Li₃N, Li₂S/Co, LiF/Co, Li₂O/Co, Li₂O₂, Li₂NiO₂, Li₅FeO₄, Li₂C₂O₄, Li₂C₄O₄, Li₂C₃O₅, and Li₂C₄O₆.

17. The charging control method according to any one of claims 3 to 15, wherein a positive electrode material of the lithium-ion battery is lithium manganese iron phosphate, and the lithium-supplementing material is Li₂C₄O₄.

18. The charging control method according to any one of claims 3 to 15, wherein a positive electrode material of the lithium-ion battery is lithium iron phosphate, and the lithium-supplementing material is LiF/Co.

19. The charging control method according to any one of claims 1 to 18, wherein a positive electrode of the lithium-ion battery adopts at least one of the following materials: nickel cobalt manganese, nickel cobalt aluminum, nickel manganese spinel, a lithium-rich manganese-based material, lithium iron phosphate, lithium manganese iron phosphate, lithium vanadium phosphate, lithium manganese phosphate, lithium nickel phosphate, and lithium manganate.

20. The charging control method according to any one of claims 1 to 19, wherein an absolute value of a difference value between a working voltage of the lithium-ion battery and the nominal voltage of the lithium-ion battery is less than or equal to 500mV.

21. A charging control apparatus of a lithium-ion battery, comprising:
a control unit, configured to perform charging control on the lithium-ion battery for the i^{th} time, so that a battery capacity value of the lithium-ion battery at a target charging cut-off voltage is 0.95C₀ to 1.05C₀, C₀ being a nominal capacity of the lithium-ion battery, the target charging cut-off voltage being less than or equal to the nominal voltage of the lithium-ion battery;
wherein i takes a value from 1 to N and N is a positive integer greater than 1.

22. The charging control apparatus according to claim 21, wherein the control unit is specifically configured to:
in a case that a charging voltage of the lithium-ion battery reaches the target charging cut-off voltage, perform charging control on the lithium-ion battery for the i^{th} time in a manner of down-regulating a charging current, so that the battery capacity value of the lithium-ion battery under the target charging cut-off voltage is 0.95C₀ to 1.05C₀.

23. The charging control apparatus according to claim 22, wherein a positive electrode of the lithium-ion battery comprises a lithium-supplementing material.

24. The charging control apparatus according to claim 23, wherein the lithium-supplementing material has the characteristic of a voltage platform area, and the voltage platform area of the lithium-supplementing material refers to: a charging test is performed on the lithium-supplementing material under the nominal voltage of the lithium-ion battery, and the obtained charging curve of the lithium-supplementing material meets that a slope of the charging curve with at least a cumulative state of charge (SOC) ratio greater than or equal to 40% is less than or equal to 15mV/1% SOC.

25. The charging control apparatus according to claim 24, further comprising:
a determining unit, configured to determine an open capacity of the lithium-ion battery according to at least one of a test precision of a state of charge (SOC) of the lithium-ion battery, a calculation error of a state of health (SOH), an aging model state of a running throughput, an excess state of an N/P ratio of a negative capacity per unit area/a positive capacity per unit area, and a system prediction error of a battery management system (BMS), wherein the open capacity is used to indicate a capacity that is required to be compensated for the lithium-ion battery; and
according to the open capacity, determine whether to perform charging control on the lithium-ion battery for the i^{th} time in a manner of down-regulating the charging current in a case that the charging voltage of the lithium-ion battery reaches the target charging cut-off voltage.

26. The charging control apparatus according to claim 25, wherein the lithium-supplementing material comprises a first voltage platform area, and the charging control apparatus further comprises:
an acquisition unit, configured to: in the i^{th} charging control, acquire a minimum charging current of the lithium-ion battery under a first target charging cut-off voltage; and
the determining unit is further configured to:
in a case that the minimum charging current is less than a current threshold, determine whether the battery capacity value of the lithium-ion battery reaches 0.95C₀ to 1.05C₀;
wherein V_{c1}=V_{pz1}±0.5V, V_{c1} is the first target charging cut-off voltage, and V_{pz1} is the first voltage platform area.

27. The charging control apparatus according to claim 26, wherein the lithium-supplementing material further comprises a second voltage platform area, and the control unit is further configured to:
in a case of determining that the battery capacity value does not reach 0.95C₀ to 1.05C₀ when the charging voltage of the lithium-ion battery reaches the first target charging cut-off voltage, control the charging voltage of the lithium-ion battery to reach a second target charging cut-off voltage;
wherein V_{c2}=V_{pz2}±0.5V, V_{c2} is the second target charging cut-off voltage, and V_{pz2} is the second voltage platform area.

28. The charging control apparatus according to claim 27, wherein the first voltage platform area and the second voltage platform area belong to a same lithium-supplementing material.

29. The charging control apparatus according to claim 27, wherein the first voltage platform area and the second voltage platform area belong to different lithium-supplementing materials.

30. The charging control apparatus according to any one of claims 26 to 29, wherein the current threshold is greater than or equal to 0.01C₀.

31. The charging control apparatus according to claim 30, wherein the current threshold is greater than or equal to 0.05C₀.

32. The charging control apparatus according to any one of claims 26 to 31, wherein the acquisition unit is specifically configured to:
determine a minimum charging current under the first target charging cut-off voltage according to a charging cumulative capacity (C), a state of charge (SOC) and a state of health (SOH) of the lithium-ion battery.

33. The charging control apparatus according to claim 32, wherein the determining unit is specifically configured to:
determine the charging cumulative capacity (C) according to the following formula:
C=C₀-SOH*C₀*SOC; and
determine the minimum charging current under the first target charging cut-off voltage according to the charging cumulative capacity (C).

34. The charging control apparatus according to any one of claims 23 to 33, wherein the N/P ratio of the negative capacity per unit area/the positive capacity per unit area of the lithium-ion battery ranges from 0.5 to 1.5.

35. The charging control apparatus according to claim 34, wherein the N/P ratio ranges from 0.6 to 1.4.

36. The charging control apparatus according to any one of claims 23 to 35, wherein the lithium-supplementing material comprises at least one of the following materials: Li₃N, Li₂S/Co, LiF/Co, Li₂O/Co, Li₂O₂, Li₂NiO₂, Li₅FeO₄, Li₂C₂O₄, Li₂C₄O₄, Li₂C₃O₅, and Li₂C₄O₆.

37. The charging control apparatus according to any one of claims 23 to 35, wherein a positive electrode material of the lithium-ion battery is lithium manganese iron phosphate, and the lithium-supplementing material is Li₂C₄O₄.

38. The charging control apparatus according to any one of claims 23 to 35, wherein a positive electrode material of the lithium-ion battery is lithium iron phosphate, and the lithium-supplementing material is LiF/Co.

39. The charging control apparatus according to any one of claims 21 to 38, wherein a positive electrode of the lithium-ion battery adopts at least one of the following materials: nickel cobalt manganese, nickel cobalt aluminum, nickel manganese spinel, a lithium-rich manganese-based material, lithium iron phosphate, lithium manganese iron phosphate, lithium vanadium phosphate, lithium manganese phosphate, lithium nickel phosphate, and lithium manganate.

40. The charging control apparatus according to any one of claims 21 to 39, wherein an absolute value of a difference value between a working voltage of the lithium-ion battery and the nominal voltage of the lithium-ion battery is less than or equal to 500mV.

41. A charging control apparatus of a lithium-ion battery, comprising a memory and a processor, wherein the memory is configured to store an instruction; and the processor is configured to read the instruction and perform the method according to any one of claims 1 to 20 according to the instruction.

42. A chip, comprising a processor, configured to call and run a computer program from a memory, so that a device installed with the chip performs the method according to any one of claims 1 to 20.

43. A computer program, wherein the computer program enables a computer to perform the method according to any one of claims 1 to 20.

44. A computer-readable storage medium, for storing a computer program, wherein the computer program enables a computer to perform the method according to any one of claims 1 to 20.

45. A computer program product, comprising a computer program instruction, wherein the computer program instruction enables a computer to perform the method according to any one of claims 1 to 20.
